# EUROPEAN PATENT APPLICATION

(11) **EP 3 767 484 A1**
(43) Date of publication of application: **20.01.2021**
(21) Application number: 19766966.6
(22) Date of filing: 12.03.2019
(51) Int. Cl.: G06F 16/00

(54) **METHOD AND DEVICE FOR PROVIDING NAVIGATION INFORMATION**

(30) Priority: 16.03.2018 CN 201810220142
(71) Applicant: Bosch Automotive Products (Suzhou) Co., Ltd., Jiangsu 215021 (CN)
(72) Inventor: WINKLER, Dominic, Suzhou, Jiangsu 215021 (CN); MORERA AGUSTI, Marc, Suzhou, Jiangsu 215021 (CN); PAN, Yao, Suzhou, Jiangsu 215021 (CN); GALANTI, Giorgio, Suzhou, Jiangsu 215021 (CN)
(74) Representative: Bee, Joachim
(86) International application number: PCT/CN2019/077833
(87) International publication number: WO 2019/174573

(57) **Abstract**

The present invention relates to navigation technology, in particular to a method for providing navigation information, an apparatus for implementing the method, and a computer storage medium. The method for providing navigation information according to one aspect of the present invention comprises the following step: generating an icon zone on the basis of a direction angle and position of a navigation object and a position of a reference object, the icon zone being suitable for use in combination with an electronic map and comprising a first icon associated with the navigation object and a second icon associated with the reference object, wherein the reference object is located inside or outside a current display region of the electronic map, and a relative positional relationship between the first icon and the second icon corresponds to a relative positional relationship between the navigation object and the reference object.

## Description

### Technical field

The present invention relates to navigation technology, in particular to a method for providing navigation information, an apparatus for implementing the method, and a computer storage medium.

### Background art

As location-based services (LBS) grow, the use of electronic maps is becoming more and more widespread. An electronic map application program (app) can be installed in a portable electronic device (such as a smartphone or tablet computer), in order to provide a user with dynamic, real-time position information, navigation services and other derived services.

Electronic map APPs in common use at the present time include for example Baidu maps, Google maps and Gaode maps, etc.; these generally determine the position of a user on the basis of a GPS signal, and mark this position and reference objects (e.g. buildings, streets, roads, bridges and rivers) on an electronic map. Furthermore, electronic maps generally provide a zoom function, in order to provide the user with corresponding map information at different scales. The user can use the zoom function to find a corresponding reference object on the electronic map, and thereby determine a position relative to the reference object (e.g. distance and direction).

However, due to the fact that many reference objects might be unable to be displayed on the electronic map at the same scale, the user often needs to use the zoom function frequently, and this results in a poor user experience. Furthermore, existing electronic maps are generally unable to merge direction information with distance information effectively.

### Summary of the invention

An object of the present invention is to provide a method for providing navigation information, which has advantages such as the ability to fuse position and direction information of a user with position information of a reference object.

The method for providing navigation information according to one aspect of the present invention comprises the following step:
generating an icon zone on the basis of a direction angle and position of a navigation object and a position of a reference object, the icon zone being suitable for use in combination with an electronic map and comprising a first icon associated with the navigation object and a second icon associated with the reference object, wherein the reference object is located inside or outside a current display region of the electronic map, and a relative positional relationship between the first icon and the second icon corresponds to a relative positional relationship between the navigation object and the reference object.

Preferably, in the method described above, the icon zone is overlaid on the current display region of the electronic map or arranged separately from the current display region of the electronic map, the relative positional relationship between the navigation object and the reference object comprises a direction or distance of the navigation object relative to the reference object, and the first icon indicates a current position and direction of the navigation object on the electronic map.

Preferably, in the method described above, a position and direction indicated by the first icon in the icon zone remain unchanged, such that when the direction angle or position of the navigation object undergoes a change, this change is reflected by changing a position of the second icon in the icon zone.

Preferably, in the method described above, a magnetic field measurement element provided on an electronic device is used to acquire the direction angle, an electronic map program running on the electronic device is used to acquire positions of the electronic device and the reference object, and the direction angle corresponds to a direction in which a designated part of the electronic device is pointing.

Preferably, in the method described above, the first icon is fixed at the center of the icon zone and has the shape of an arrow, a direction of the arrow indicating the direction angle, the icon zone comprises one or more figures centered at the first icon, each figure corresponding to a different energy level of a vehicle, and the second icon comprises multiple icons to indicate the positions of multiple reference objects, the multiple icons being disposed on the corresponding figures according to the energy level needed for the vehicle to reach the corresponding reference objects.

Another object of the present invention is to provide an electronic device, which has advantages such as being able to merge position and direction information of a user with position information of a reference object when providing navigation information.

The electronic device according to another aspect of the present invention comprises a memory, a processor, and a computer program which is stored in the memory and capable of being run on the processor, wherein the computer program is run to perform the following step:
generating an icon zone on the basis of a direction angle and position of a navigation object and a position of a reference object, the icon zone being suitable for use in combination with an electronic map and comprising a first icon associated with the navigation object and a second icon associated with the reference object, wherein the reference object is located inside or outside a current display region of the electronic map, and a relative positional relationship between the first icon and the second icon corresponds to a relative positional relationship between the navigation object and the reference object.

Another object of the present invention is to provide an apparatus for providing navigation information, which has advantages such as being able to merge position and direction information of a user with position information of a reference object.

The apparatus for providing navigation information according to another aspect of the present invention comprises:
an icon zone generating module, for generating an icon zone on the basis of a direction angle and position of a navigation object and a position of a reference object, the icon zone comprising a first icon associated with the navigation object and a second icon associated with the reference object, wherein a relative positional relationship between the first icon and the second icon corresponds to a relative positional relationship between the navigation object and the reference object.

The present invention also provides a computer-readable storage medium, with a computer program stored thereon, characterized in that the program, when executed by a processor, realizes the method as described above.

In the various aspects of the present invention which are described above, the position of the first icon is the position of the user or electronic device, and the direction of the first icon is the direction in which the user is observing the surrounding environment; this manner of information presentation, in which the first icon is always at the center of the icon zone and the direction indicated by the first icon remains unchanged, is very much in line with the habits of humans in observing the surrounding environment, thus the user experience when using navigation information is greatly improved.

### Brief description of the drawings

The abovementioned and/or other aspects and advantages of the present invention will become clearer and easier to understand through the following description of various aspects in conjunction with the drawings, in which identical or similar units are marked with identical labels. The drawings include:
Figs. 1A - 1C are schematic drawings of examples of an electronic compass suitable for displaying on a display screen of an electronic device, and show corresponding navigation pictures when a navigation object is facing in different directions or has different direction angles.
Fig. 1D is a schematic drawing of another example of an electronic compass suitable for displaying on a display screen of an electronic device.
Fig. 2 is a flow chart of a method for providing navigation information according to an embodiment of the present invention.
Fig. 3 is a block diagram of an apparatus for providing navigation information according to another embodiment of the present invention.
Fig. 4 is a schematic block diagram of an electronic device according to another embodiment of the present invention.

### Detailed description of embodiments

The present invention is explained more comprehensively below, with reference to the drawings showing schematic embodiments of the present invention. However, the present invention may be realized in different forms, and should not be interpreted as being limited to the embodiments given herein. The embodiments given are intended to make the disclosure herein comprehensive and complete, in order to convey the scope of protection of the present invention to those skilled in the art more comprehensively.

In this specification, terms such as "include" and "comprise" indicate that in addition to having units and steps which are directly and explicitly stated in the specification and the claims, the technical solution of the present invention does not exclude scenarios having other units and steps which are not stated directly or explicitly.

In this specification, terms such as "first" and "second" do not indicate the order of units in time, space or size, etc., but are merely used to distinguish between different units.

In this specification, "coupling" should be understood to include scenarios in which electrical energy or electrical signals are transmitted directly between two units, or scenarios in which electrical energy or electrical signals are transmitted indirectly via one or more third units.

According to one aspect of the present invention, an icon zone is generated on the basis of a direction angle and position of a navigation object and a position of a reference object. The icon zone generated is suitable for use in combination with an electronic map and comprises a first icon and a second icon, wherein the first icon is associated with the navigation object in order to indicate the position and direction of the navigation object in the icon zone, and the second icon is associated with the reference object in order to indicate the position of the reference object in the icon zone; the reference object corresponding to the second icon may be located in a current display region of the electronic map, or may be located outside the current display region; in addition, a relative positional relationship (e.g. distance and bearing) between the first icon and the second icon in the icon zone corresponds to a relative positional relationship between the navigation object and the reference object in a physical space.

The ways in which the icon zone is used in combination with the electronic map for example include, but are not limited to, overlaying the icon zone on the current display region of the electronic map, and arranging the icon zone and the current display region of the electronic map separately from one another.

Preferably, the first icon also indicates a current position and direction of the navigation object on the electronic map.

It must be pointed out that in the prior art, it might not be possible for multiple reference objects to be displayed on the electronic map at the same scale, and consequently, it is often necessary for the user to use the zoom function frequently. According to the abovementioned aspect of the present invention, since it is possible for a reference object located outside a display region of the electronic map to be displayed in the icon zone, frequent zooming operations are avoided.

Preferably, the position and direction indicated by the first icon in the icon zone remain unchanged. For example, when the navigation object is moved or turned, the position of the first icon in the icon zone and the indicated direction are fixed; furthermore, the position of the second icon in the icon zone will change to reflect the change in position and direction of the navigation object.

In general, the user or navigation object (e.g. vehicle) is very close to an electronic device (e.g. the electronic device is held in the user's hand), or the electronic device itself may even be the navigation object, in which case the position of the first icon is the position of the user, and the direction of the first icon is the direction in which the user is observing the surrounding environment; thus, the manner of information presentation described above, in which the first icon is always at the center of the icon zone and the direction indicated by the first icon remains unchanged, is very much in line with the habits of humans in observing the surrounding environment, and this greatly improves the user experience when using navigation information.

Optionally, the position indicated by the first icon in the icon zone remains unchanged, but the direction changes to indicate a specific direction (e.g. North or South). In this case, when the navigation object is moved or turned, the position of the first icon in the icon zone does not change but, due to the turning of the navigation object, the indicated direction will change accordingly; furthermore, the position of the second icon in the icon zone will change to reflect the change in position and direction of the navigation object.

The direction angle mentioned herein means the direction in which a designated part of the navigation object (e.g. the front end of a vehicle, smartphone or tablet computer) is pointing. The reference object mentioned herein may be any object used to assist the user in determining the position thereof in a physical space; examples of reference objects include but are not limited to buildings (e.g. stations, wharves, airports, bridges, office blocks and dwellings, etc.), natural landmarks (mountain peaks, trees and ponds, etc.) and specific positions associated with the user (e.g. the user's residence, the user's workplace and the positions of the user's friends and family, etc.).

Preferably, the icon zone may take the form of an electronic compass, wherein the position of the first icon is fixed at the center of the electronic compass and has the shape of an arrow; the shape of the arrow indicates the direction angle of the navigation object (i.e. the direction in which a designated part of the navigation object is facing), and the second icon is located on the circumference of a circle centered at the center of the electronic compass. In the case where multiple reference objects are present, for each reference object a corresponding second icon can be designated, with these second icons being disposed on one or more circumferences. In some applications, the method of using concentric circles to show the distance between the reference object and the navigation object, or reachability, is beneficial. For example, a correspondence exists between the travelling distance or mileage range of a vehicle (including but not limited to vehicles in which the source of motive power is electrical energy, chemical energy or a hybrid form of energy, such as electric small-wheeled motorcycles, electric scooters or electric bicycles) and the level of energy stored in the vehicle, thus the use of the abovementioned concentric circles enables a zone lying within the mileage range and a zone lying outside the mileage range of these vehicles to be shown in a visually direct manner by means of an image.

It must be pointed out that although the icon zone described above uses circles to distinguish between the zone lying within the mileage range and the zone lying outside the mileage range, figures of other shapes may also be used to distinguish between the two zones, e.g. regular shapes such as rectangles, ovals and triangles, as well as irregular shapes, etc. Due to the irregular nature of city roads, it is more practical to use irregular figures to distinguish between the zone lying within the mileage range and the zone lying outside the mileage range.

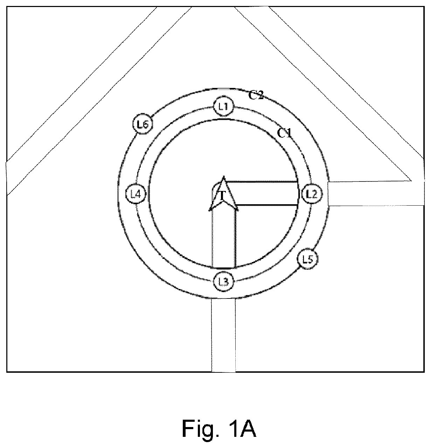

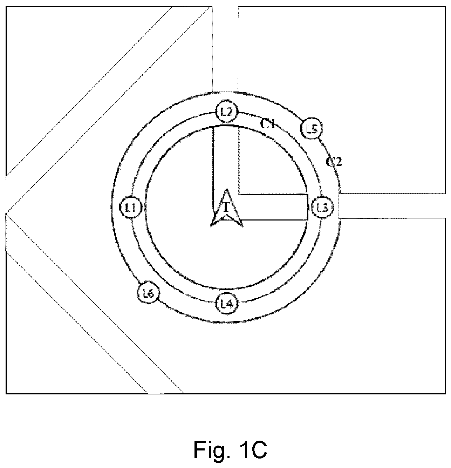

Figs. 1A - 1C are schematic drawings of examples of an electronic compass suitable for displaying on a display screen of an electronic device, and show corresponding navigation pictures when the navigation object is facing in different directions or has different direction angles. In figs. 1A - 1C, the electronic compass is for example overlaid in an electronic map as an independent picture layer, the arrow-shaped icon T located at the center of the electronic compass is a first icon, L1 - L6 are second icons representing reference objects, and the region in the form of lines belongs to a picture layer in which the electronic map lies, and represents roads in the electronic map. In the following description, for convenience of expression, T is used to denote the first icon and the navigation object without distinguishing therebetween, and any one of L1 - L6 is used to denote one of the second icons and the corresponding reference object without distinguishing therebetween. Referring to figs. 1A - 1C, by way of demonstration, the electronic compass shown in the figures comprises two concentric circumferences C1 and C2 of circles centered at the center of the electronic compass, wherein reference objects L1 - L4 are located on circumference C1, and reference objects L5 - L6 are located on circumference C2.

Demonstratively, circumferences C1 and C2 in figs. 1A - 1C are used to represent a zone lying within the mileage range and a zone lying outside the mileage range of a vehicle respectively; thus, when reference objects L1 - L4 are placed on circumference C1, this indicates that reference objects L1 - L4 are in the zone lying within the mileage range, and when reference objects L5 - L6 are placed on circumference C2, this indicates that reference objects L5 - L6 are in the zone lying outside the mileage range.

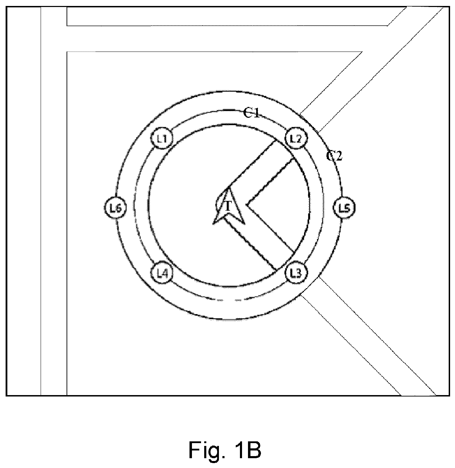

In the scenario shown in fig. 1A, the arrow of the first icon T is pointing directly at second icon L1 (i.e. a designated part (e.g. the front end) of the navigation object is directly facing reference object L1), reference objects L2 and L5 are located at the right side of the first icon T, reference object L3 is located behind the first icon T, and reference objects L4 and L6 are located at the left side of the first icon T. When the front end of the navigation object turns anticlockwise through an angle, the first icon T still points directly ahead (i.e. directly towards the top of the sheet of paper), but at this time, reference objects L2, L5 and L3 are located at the right side of the first icon T, and reference objects L1, L6 and L4 are located at the left side of the first icon T, as shown in fig. 1B. When the front end of the navigation object turns anticlockwise through 90 degrees, the arrow of the first icon T still points directly ahead; at this time, reference object L2 is located directly in front of the first icon T, reference object L4 is located behind the first icon T, reference objects L5 and L3 are located at the right side of the first icon T, and reference objects L1 and L6 are located at the left side of the first icon T.

It can be seen from the above examples shown with the aid of figs. 1A - 1C that, regardless of the way in which the direction angle of the navigation object changes, the position and direction of the first icon in the icon zone or electronic compass remain unchanged; it is the position and direction of the second icon which change. Similarly, when the navigation object is moved, the position and direction of the first icon in the icon zone or electronic compass still remain unchanged, but the positions of the second icons L1 - L6 in the icon zone or electronic compass will change. Taking fig. 1A as an example, if, starting from the position in fig. 1A, the navigation object moves a certain distance directly to the right, then reference objects L1 and L3 will move in the electronic compass from directly in front of and directly behind the first icon T to the left side of the navigation object and the distance of these reference objects from the first icon T will increase, reference objects L4 and L6 will still be located at the left side of the first icon T and the distance of these reference objects from the first icon T will likewise increase, and reference objects L2 and L5 will still be located at the right side of the first icon T but the distance of these reference objects from the first icon T will decrease.

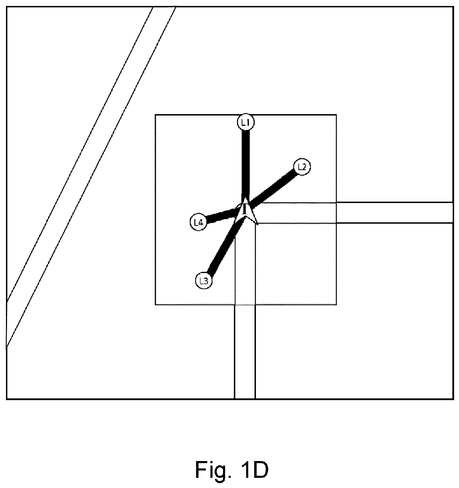

Fig. 1D is a schematic drawing of another example of an electronic compass suitable for displaying on a display screen of an electronic device. In fig. 1D, an electronic compass (the rectangle located at the centre of the picture) is for example overlaid on a display region of an electronic map as an independent picture layer; the arrow-shaped first icon T is located at the centre of the electronic compass, L1 - L4 are second icons representing reference objects, the region in the form of lines belongs to a picture layer in which the electronic map lies, and represents roads in the electronic map, and the black line segments belong to the picture layer in which the icon zone lies, and represent roads in the icon zone.

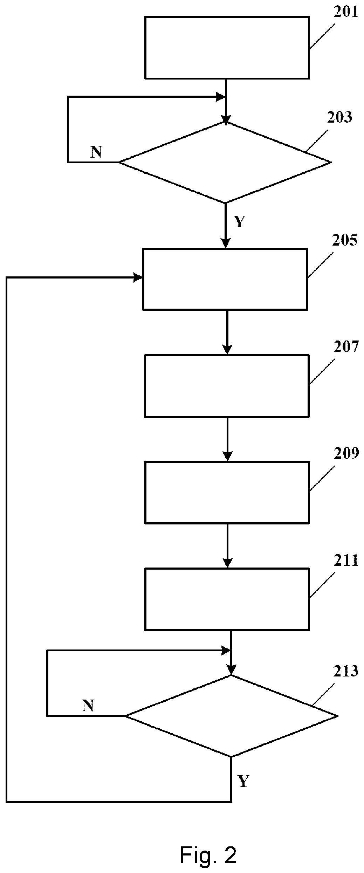

Fig. 2 is a flow chart of a method for providing navigation information according to an embodiment of the present invention. Demonstratively, the method of this embodiment is realized by means of an app running on a smartphone (also called an electronic compass app hereinbelow), and the direction of a specific part of the smartphone located close to a navigation object is taken to be the direction angle of the navigation object. However, it must be pointed out that the implementation of the method of this embodiment is not limited to an apparatus having a specific structure, but may for example also be implemented by means of an app running on another computing apparatus (e.g. a tablet computer, navigation device or personal digital assistant, etc.).

As shown in fig. 2, first of all, in step 201, an electronic device is switched on and runs.

Next, step 203 is performed: the electronic device determines whether the electronic compass app has been started up; if so, then step 205 is performed, otherwise the electronic device continues to wait.

In step 205, the electronic device acquires a direction angle and position thereof. In this embodiment, a magnetic field measurement element provided on the electronic device may be used to acquire the direction angle. The position of the navigation object may be determined using various positioning technologies (e.g. may be determined by means of a received satellite positioning signal or WiFi signal). Preferably, an electronic map program running on the electronic device may be used to acquire the position of the navigation object. Demonstratively, the electronic compass app may send to the electronic map program a request to acquire the current position of the electronic device, and in response to the request, the electronic map app sends position data obtained by a positioning function module back to the electronic compass app. Preferably, the electronic compass app may be integrated into the electronic map app.

Next, step 207 is performed: the electronic device acquires the position of a reference object. Preferably, the electronic map program running on the electronic device may be used to acquire the position of the reference object (the relative positional relationship between the navigation object and the reference object can thereby be determined). Similarly, the electronic compass app may send to the electronic map program a request to acquire the current position of the reference object, and in response to the request, the electronic map app sends position data of the reference object back to the electronic compass app. In this embodiment, the reference object may be set by the user in advance or set in real time, or may be determined by the electronic device autonomously (e.g. based on the prominence, etc. of the reference object).

Step 209 is then performed: based on the direction angle and position of the navigation object obtained in step 205 and the position of the reference object obtained in step 207, the electronic device generates an icon zone or electronic compass suitable for displaying on the electronic device. In this embodiment, the icon zone generated has the various features and form described above. In particular, the icon zone comprises a first icon associated with the navigation object and a second icon associated with the reference object; the first icon is located at a fixed position in the icon zone and the direction thereof remains unchanged, whereas the position of the second icon changes in the icon zone as the direction angle or position of the navigation object changes.

Next, step 211 is performed: the electronic device displays the electronic compass generated in step 209 on a display screen thereof.

Step 213 is then performed: the electronic device determines whether a preset time interval has passed since the most recent icon zone was generated, and if so, the method returns to step 205 to update the icon zone in real time, otherwise the electronic device continues to wait.

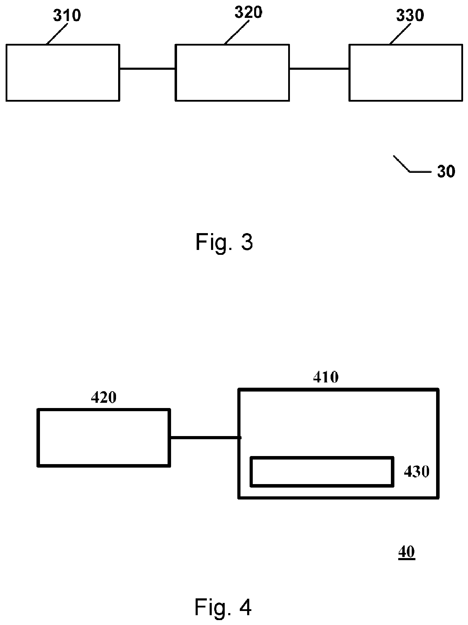

Fig. 3 is a block diagram of an apparatus for providing navigation information according to another embodiment of the present invention.

The apparatus 30 shown in fig. 3 comprises a first module 310, a second module 320 and a third module 330. In this embodiment, the first module 310 is used to acquire the direction angle and position of a navigation object, the direction angle being the direction in which a designated part of the navigation object is pointing; the second module 320 is used to acquire the position of a reference object; and the third module 330 is used to generate an icon zone on the basis of the direction angle and position of the navigation object and the position of the reference object. The icon zone is suitable for use in combination with an electronic map and comprises a first icon associated with the navigation object and a second icon associated with the reference object, wherein the reference object is located inside or outside a current display region of the electronic map, and a relative positional relationship between the first icon and the second icon corresponds to a relative positional relationship between the navigation object and the reference object.

It must be pointed out that the acquisition of the direction angle and position of the navigation object and the position of the reference object may be performed in the apparatus 30; thus, in another embodiment, the apparatus 30 may only comprise an icon zone generating module or the third module 330, with the first module 310 and second module being disposed outside the apparatus 30.

Fig. 4 is a schematic block diagram of an electronic device according to another embodiment of the present invention.

The electronic device 40 shown in fig. 4 comprises a memory 410, a processor 420, and a computer program 430 which is stored in the memory 410 and capable of being run on the processor 420, wherein the method for providing navigation information described above with the aid of figs. 1A - 1D and fig. 2 can be realized by executing the computer program 430.

According to another aspect of the present invention, also provided is a computer-readable storage medium, on which is stored a computer program which, when executed by a processor, can realize the method for providing navigation information described above with the aid of figs. 1A - 1D and fig. 2.

The embodiments and examples set out herein are provided in order to explain in the best possible way embodiments according to the present technology and specific applications thereof, and thereby enable those skilled in the art to realize and use the present invention. However, those skilled in the art will know that the above descriptions and examples are provided merely to facilitate explanation and demonstration. The descriptions set out are not intended to cover all aspects of the present invention or to limit the present invention to the precise form disclosed.

In view of the above, the scope of the present disclosure is determined by the claims below.

## Claims

1. A method for providing navigation information, **characterized by** comprising the following step:
generating an icon zone on the basis of a direction angle and position of a navigation object and a position of a reference object, the icon zone being suitable for use in combination with an electronic map and comprising a first icon associated with the navigation object and a second icon associated with the reference object, wherein the reference object is located inside or outside a current display region of the electronic map, and a relative positional relationship between the first icon and the second icon corresponds to a relative positional relationship between the navigation object and the reference object.

2. The method as claimed in claim 1, wherein the icon zone is overlaid on the current display region of the electronic map or arranged separately from the current display region of the electronic map, the relative positional relationship between the navigation object and the reference object comprises a direction or distance of the navigation object relative to the reference object, and the first icon indicates a current position and direction of the navigation object on the electronic map.

3. The method as claimed in claim 1, wherein a position and direction indicated by the first icon in the icon zone remain unchanged, such that when the direction angle or position of the navigation object undergoes a change, this change is reflected by changing a position of the second icon in the icon zone.

4. The method as claimed in claim 1, wherein a magnetic field measurement element provided on an electronic device is used to acquire the direction angle, an electronic map program running on the electronic device is used to acquire positions of the electronic device and the reference object, and the direction angle corresponds to a direction in which a designated part of the electronic device is pointing.

5. The method as claimed in claim 1, wherein the first icon is fixed at the center of the icon zone and has the shape of an arrow, a direction of the arrow indicating the direction angle, the icon zone comprises one or more figures centered at the first icon, each figure corresponding to a different energy level of a vehicle, and the second icon comprises multiple icons to indicate the positions of multiple reference objects, the multiple icons being disposed on the corresponding figures according to the energy level needed for the vehicle to reach the corresponding reference objects.

6. An electronic device, comprising a memory, a processor, and a computer program which is stored in the memory and capable of being run on the processor, wherein the computer program is run to perform the following step:
generating an icon zone on the basis of a direction angle and position of a navigation object and a position of a reference object, the icon zone being suitable for use in combination with an electronic map and comprising a first icon associated with the navigation object and a second icon associated with the reference object, wherein the reference object is located inside or outside a current display region of the electronic map, and a relative positional relationship between the first icon and the second icon corresponds to a relative positional relationship between the navigation object and the reference object.

7. The electronic device as claimed in claim 6, wherein the icon zone is overlaid on the current display region of the electronic map or arranged separately from the current display region of the electronic map, the relative positional relationship between the navigation object and the reference object comprises a direction or distance of the navigation object relative to the reference object, and the first icon indicates a current position and direction of the navigation object on the electronic map.

8. The electronic device as claimed in claim 6, wherein the electronic device is one of the following devices: a smartphone, a tablet computer, a navigation device and a personal digital assistant; a magnetic field measurement element provided on the electronic device is used to acquire the direction angle, an electronic map program running on the electronic device is used to acquire positions of the electronic device and the reference object, and the direction angle corresponds to a direction in which a designated part of the electronic device is pointing.

9. The electronic device as claimed in claim 6, wherein the first icon is fixed at the center of the icon zone and has the shape of an arrow, a direction of the arrow indicating the direction angle, the icon zone comprises one or more figures centered at the first icon, each figure corresponding to a different energy level of a vehicle, and the second icon comprises multiple icons to indicate the positions of multiple reference objects, the multiple icons being disposed on the corresponding figures according to the energy level needed for the vehicle to reach the corresponding reference objects.

10. An apparatus for providing navigation information, **characterized by** comprising:
an icon zone generating module, for generating an icon zone on the basis of a direction angle and position of a navigation object and a position of a reference object, the icon zone comprising a first icon associated with the navigation object and a second icon associated with the reference object, wherein a relative positional relationship between the first icon and the second icon corresponds to a relative positional relationship between the navigation object and the reference object.

11. A computer-readable storage medium, with a computer program stored thereon, **characterized in that** the computer program, when executed by a processor, realizes the method as claimed in any one of claims 1 - 5.
